# EUROPEAN PATENT SPECIFICATION

(11) **EP 3 039 270 B1**
(45) Date of publication and mention of the grant of the patent: **06.03.2019**
(21) Application number: 14839611.2
(22) Date of filing: 26.08.2014
(51) Int. Cl.: F02C 9/00, F02C 9/28, F02C 9/46, G01K 13/00, F02D 41/22, G01K 3/10, G01K 13/02

(54) **GAS TURBINE FLAMEOUT DETECTION**
NACHWEIS VON FLAMMENDURCHSCHLAG BEI EINER GASTURBINE
DÉTECTION DE L'EXTINCTION D'UNE TURBINE À GAZ

(30) Priority: 27.08.2013 US 201361870615 P
(43) Date of publication of application: 06.07.2016
(73) Proprietor: United Technologies Corporation, Farmington, CT 06032 (US)
(72) Inventor: AJAMI, Andre, M., Spring Valley, California 91977 (US); TURNER, Jason, Eric, San Diego, California 92109 (US); WINSTON, Kenneth, W., San Diego, California 92129 (US)
(74) Representative: Dehns
(86) International application number: PCT/US2014/052641
(87) International publication number: WO 2015/031318

(56) References cited:
- JP-A- H1 089 089
- JP-A- 2003 214 189
- KR-B1- 100 534 705
- US-A- 4 910 956
- US-A1- 2004 200 206
- US-A1- 2010 107 591
- US-B1- 7 328 098

## Description

### BACKGROUND

The present disclosure relates to engine flameout detection, and in particular to engine flameout detection of a gas turbine engine.

Many aircraft and industrial power generators use gas turbine engines to generate thrust and/or electrical power. Generally, gas turbine engines include a fan section, a compressor section, a combustor section and a turbine section. The fan section drives air along a bypass flow path while the compressor section draws air in along a core flow path where air is compressed and communicated to the combustor section. In the combustor section, air is mixed with fuel and ignited to generate a high pressure exhaust gas stream that expands through the turbine section where energy is extracted and utilized to drive the fan section and the compressor section.

In some cases, extinction of the flame in the combustor section, often referred to as an engine flameout condition, can occur. Typically, a controller such as a full authority digital engine controller (FADEC) monitors the gas turbine engine to determine whether an engine flameout condition has occurred. In response to identifying an engine flameout condition, the controller can close a fuel supply to the gas turbine engine, thereby preventing fuel from entering the combustor section. However, in some cases, such as when the engine flameout condition is not quickly detected, excess fuel can be expelled from the gas turbine engine exhaust, which can have negative consequences. US 2010/107591 A1 describes methods and apparatus for detecting a flameout of an operating turbomachine.

### SUMMARY

In one example, a method includes receiving an indication of exhaust gas temperature (EGT) for a gas turbine engine, and determining, by at least one processor, based on the received indication of the EGT, a representation of a second derivative with respect to time of the EGT. The method further includes comparing the representation of the second derivative of the EGT to a threshold value, and determining, based on the comparing, an engine flameout condition of the gas turbine engine.

In another example, a system includes a gas turbine engine comprising an inlet region and an outlet region. The system further includes at least one exhaust gas temperature (EGT) sensor disposed proximate the outlet region of the gas turbine engine and configured to output an EGT signal indicative of a temperature of exhaust gas exiting the outlet region of the gas turbine engine. The system further includes a processing circuit communicatively coupled to the at least one EGT sensor. The processing circuit is configured to receive the EGT signal from the at least one EGT sensor, and determine, based on the received EGT signal, a representation of a second derivative with respect to time of the temperature of the exhaust gas exiting the outlet region of the gas turbine engine. The processing circuit is further configured to compare the representation of the second derivative of the temperature of the exhaust gas exiting the outlet region of the gas turbine engine to a threshold value, and determine, based on the comparison, an engine flameout condition of the gas turbine engine.

In another example, a method includes receiving an indication of exhaust gas temperature (EGT) for a gas turbine engine, and determining, by at least one processor, based on the received indication of the EGT, a representation of a first derivative with respect to time of the EGT. The method further includes determining, by the at least one processor, based on the received indication of the EGT, a threshold value, comparing the representation of the first derivative of the EGT to the threshold value, and determining an engine flameout condition of the gas turbine engine based on the comparing.

### BRIEF DESCRIPTION OF THE DRAWINGS

FIG. 1 is a schematic diagram of a system that can determine an engine flameout condition, according to an embodiment.
FIG. 2 is a flow diagram illustrating operations to determine an engine flameout condition, according to an embodiment.
FIG. 3 is a flow diagram illustrating operations to determine an engine flameout condition, according to an alternative example not falling under the scope of the claims.

### DETAILED DESCRIPTION

According to techniques described herein, an engine flameout condition of a gas turbine engine can be quickly detected, thereby enabling a fuel supply to be closed in order to prevent excess unburned fuel from being expelled from the gas turbine engine. Rather than determine the engine flameout condition based solely on a rotational speed of a rotor of the gas turbine engine, a system implementing techniques of this disclosure can determine the engine flameout condition based on exhaust gas temperature (EGT) of the gas turbine engine. For example, an engine flameout condition may be detected in response to determining that a second derivative (with respect to time) of the EGT satisfies a threshold value corresponding to a threshold deceleration of EGT (i.e., an acceleration of EGT having a negative sign), such as a second derivative of the EGT that is less than (or equal to) the threshold deceleration value. An alternative example not falling under the scope of the claims described herein comprises an engine flameout condition may be determined based on a comparison of a first derivative (with
respect to time) of the EGT to a threshold value, such as a threshold value corresponding to a negative EGT rate. An engine flameout condition may be determined prior to substantial deceleration of the engine rotor, thereby enabling the fuel supply to be more quickly cut off to the gas turbine engine. Accordingly, a system implementing techniques of this disclosure can prevent excess unburned fuel from being expelled from the engine exhaust.

### Second Derivative Embodiment

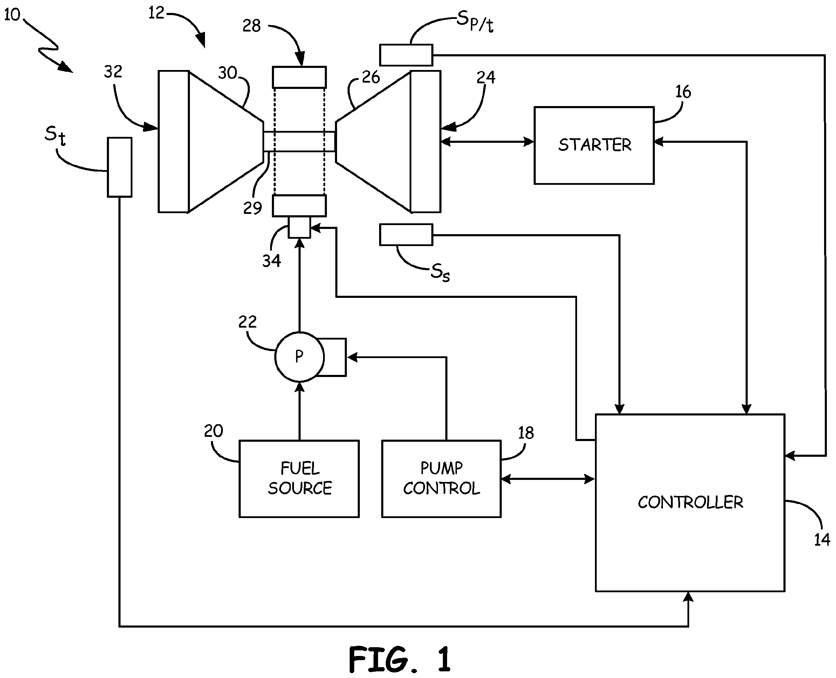

FIG. 1 is a schematic diagram of system 10 that can determine an engine flameout condition of gas turbine engine 12, according to an embodiment. As illustrated, system 10 includes controller 14, starter 16, pump controller 18, fuel source 20, fuel pump 22, EGT temperature sensor S_{T}, rotational speed sensor S_{S}, and inlet pressure and temperature sensor S_{P/T}. Gas turbine engine 12 includes inlet region 24, compressor section 26, combustor section 28, mid-shaft 29, turbine section 30, and outlet region 32. Combustor section 28 includes fuel cutoff solenoid 34.

In some examples, gas turbine engine 12 can be mounted in an aircraft or other vehicle and used to generate thrust and/or electrical power for use by the vehicle. In other examples, gas turbine engine 12 may not include a fan (e.g., a fan included in a turbofan engine). For instance, in some embodiments, gas turbine engine 12 can be part of an auxiliary power unit (APU), such as an APU mounted in an aircraft, to supply compressed air to aircraft systems and/or generate electrical power via one or more generators powered by the APU. In yet other examples, gas turbine engine 12 can be an industrial gas turbine engine utilized by, for example, an industrial power plant to generate electrical power. As illustrated, gas turbine engine 12 includes inlet region 24 that is configured to accept inflow of air and direct the air to compressor section 26. Compressor section 26 is configured to draw air in through inlet region 24 along a core flow path and to compress the air which is communicated to combustor section 28. Combustor section 28 (illustrated as a cross section with dashed lines indicating that combustor section 28 extends circumferentially about mid-shaft 29) is configured to mix the compressed air with fuel and ignite the fuel-air mixture to generate a high pressure exhaust gas stream that expands through turbine section 30 and exits through outlet region 32. Energy is extracted from the expanding air as it moves through turbine section 30 (e.g., via turbines) to drive compressor section 26 via rotation of mid-shaft 29 that mechanically connects turbine section 30 and compressor section 26.

Controller 14, in some examples, can be part of a supervisory system to monitor and control operational aspects of gas turbine engine 12. For instance, controller 14 can be part of a full authority digital engine controller (FADEC) that can be physically remote from and communicatively coupled (e.g., electrically coupled, coupled via one or more communication networks, etc.) to gas turbine engine 12 and/or other components of system 10 to receive one or more signals indicative of operational parameters of one or more components of system 10 (including gas turbine engine 12) and/or transmit signals to the one or more components to control operational aspects of system 10.

In some examples, controller 14 can include one or more processing circuits (e.g., processors) and/or one or more computer-readable storage devices (e.g., computer-readable memory such as RAM). For instance, one or more processing circuits of controller 14 can be configured to implement functionality and/or process instructions, such as instructions stored within one or more computer-readable storage devices, for execution within controller 14. Examples of such processors and/or processing circuits can include, but are not limited to, any one or more of a microprocessor, a controller, a digital signal processor (DSP), an application specific integrated circuit (ASIC), a field-programmable gate array (FPGA), or other equivalent discrete or integrated logic circuitry.

Computer-readable storage devices of controller 14, in some examples, can be described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, the computer-readable storage devices of controller 14 can be a temporary memory, meaning that a primary purpose of the computer-readable storage devices is not long-term storage. In certain examples, the computer-readable storage devices of controller 14 can be volatile memory, meaning that the computer-readable storage devices do not maintain stored contents when power to controller 14 is turned off. Examples of volatile memories can include random access memories (RAM), dynamic random access memories (DRAM), static random access memories (SRAM), and other forms of volatile memories.

As illustrated in FIG. 1, controller 14 can be communicatively coupled to components of system 10, such as to starter 16, pump controller 18, EGT temperature sensor S_{T}, rotational speed sensor S_{S}, inlet pressure and temperature sensor S_{P/T}, fuel cutoff solenoid 34, or one or more other components of system 10. For example, in operation, controller 14 can transmit one or more signals to control operation of starter 16 that is coupled to gas turbine engine 12 to physically operate a rotor of gas turbine engine 12, such as during a startup phase of gas turbine engine 12. Similarly, controller 14 can be communicatively coupled to pump controller 18 and fuel cutoff solenoid 34. Controller 14 can transmit one or more signals to pump controller 18 to control fuel flow (e.g., an amount of fuel flow and/or a rate of fuel flow, etc.) drawn by pump 22 from fuel source 20 to combustor section 28. Controller 14 can transmit one or more signals (e.g., an electrical signal) to control operation of fuel cutoff solenoid 34 that opens and closes a fuel inlet valve within gas turbine 12. For instance, in certain examples, controller 14 can open an electrical circuit connected to fuel cutoff solenoid 34, thereby causing fuel cutoff solenoid 34 to close the fuel inlet valve that regulates a supply of fuel (e.g., from fuel source 20 via fuel pump 22) to gas turbine engine 12. Similarly, in some examples, controller 14 can close the electrical circuit to fuel cutoff solenoid 34, thereby causing fuel cutoff solenoid 34 to open the inlet valve and allow fuel to enter gas turbine engine 22.

As further illustrated in FIG. 1, controller 14 can be communicatively coupled (e.g., electrically coupled, coupled via one or more communication networks, and the like) to EGT temperature sensor S_{T}, rotational speed sensor S_{S}, and/or inlet pressure and temperature sensor S_{P/T}. EGT temperature sensor S_{T} can be disposed proximate outlet region 32 (e.g., extending into a flow of exhaust gas exiting outlet region 32) and configured to output an EGT signal indicative of a temperature of exhaust gas exiting outlet region 32 of gas turbine engine 12. For instance, in some examples, EGT temperature sensor S_{T} can be a thermocouple configured to output a voltage indicative of a temperature of exhaust gas exiting outlet region 32. In other examples, EGT temperature sensor S_{T} can include one or more processors (e.g., a microcontroller) that outputs a digital signal indicative of the temperature of exhaust gas exiting outlet region 32.

Rotational speed sensor S_{S} (e.g., a turbine speed sensor) can be disposed within and/or proximate gas turbine engine 12 and configured to output a signal indicative of a rotational speed of a rotor of gas turbine engine 12. For example, rotational speed sensor S_{S} can be a magnetic speed sensor that utilizes an encoder to measure rotational speed and/or position of a rotor of gas turbine engine 12 and outputs a voltage and/or digital signal indicative of the rotational speed and/or position to controller 14.

Inlet pressure and temperature sensor S_{P/T} can be disposed proximate inlet region 24 (e.g., extending into a flow path of air entering inlet region 24) and configured to output one or more signals indicative of a temperature and/or pressure of air entering inlet region 24 of gas turbine engine 12. For instance, inlet pressure and temperature sensor S_{P/T} can include a pressure transducer configured to output an electrical signal (e.g., a voltage) indicative of a pressure of air entering inlet region 24. In certain examples, inlet pressure and temperature sensor S_{P/T} can include a temperature sensor, such as a thermocouple, configured to output an electrical signal (e.g., a voltage) indicative of a temperature of air entering inlet region 24. That is, in some examples, inlet pressure and temperature sensor S_{P/T} can be a single sensor (e.g., included in a single housing) that is configured to sense both temperature and pressure of air entering inlet region 24 and output one or more signals (e.g., one or more analog signals, such as an electrical signal, and/or one or more digital signals) indicative of pressure and temperature of air entering inlet region 24. Although illustrated as a single sensor S_{P/T}, in other embodiments, inlet pressure and temperature sensor S_{P/T} can be multiple sensors, such as separate temperature and pressure sensors that are each communicatively coupled to controller 14 and configured to output signals indicative of a temperature of air entering inlet region 24 and a pressure of air entering inlet region 24, respectively.

According to techniques described herein, controller 14 can determine an engine flameout condition (e.g., an extinction of flame within combustor section 28) based on a comparison of a representation of a second derivative of EGT (i.e., a temperature of exhaust gas exiting outlet region 32 of gas turbine engine 12) to a threshold value. For example, as is further described herein, controller 14 can receive an indication of EGT from EGT temperature sensor S_{T}, and can determine a representation of a second derivative with respect to time of the EGT (e.g., a numerical approximation of the second derivative with respect to time). Controller 14 can compare the representation of the second derivative of the EGT to a threshold value, such as a threshold value determined by controller 14 according to techniques described herein. In some examples, such as when the representation of the second derivative of EGT satisfies the threshold value, controller 14 can determine an engine flameout condition of gas turbine engine 12. In response, controller 14 can transmit a signal to fuel cutoff solenoid 34 to close a fuel inlet supply of gas turbine engine 12. In some examples, in response to determining the engine flameout condition, controller 14 can initiate a sequence of events to re-light the combustor. In this way, controller 14 can determine the engine flameout condition based on a rapid deceleration of EGT, which can decelerate prior to and with greater magnitude than a rotational speed of a rotor of gas turbine engine 12. Accordingly, techniques described herein can enable controller 14 to quickly determine the engine flameout condition and cut off a fuel supply to gas turbine engine 12, thereby helping to prevent excess (e.g., unburned) fuel from being expelled from gas turbine engine 12.

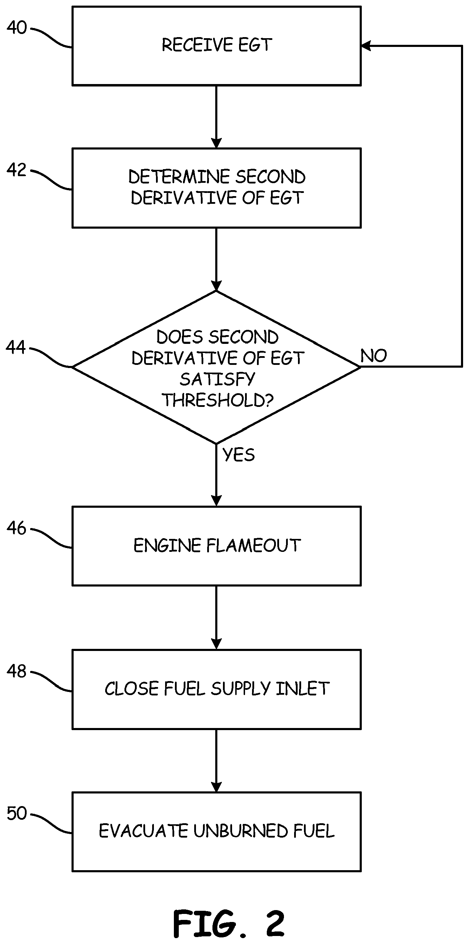

FIG. 2 is a flow diagram illustrating operations to determine an engine flameout condition, according to an embodiment. For purposes of illustration, the example operations are described below within the context of system 10 as shown in FIG. 1.

An indication of exhaust gas temperature (EGT) for a gas turbine engine can be received (40). For example, controller 14, including one or more processing circuits (e.g., processors) and/or computer-readable storage devices, can receive a signal (e.g., a voltage signal) from EGT temperature sensor S_{T} that is indicative of temperature of exhaust gas exiting outlet region 32 of gas turbine 12.

A representation of a second derivative with respect to time of the EGT can be determined based on the received indication of the EGT (42). As an example, controller 14 can determine, based on the received indication of the EGT, a numerical approximation of a second derivative with respect to time of the EGT. For instance, controller 14 can receive a first indication of a first EGT at a first time, a second indication of a second EGT at a second time that is later than the first time, and a third indication of a third EGT at a third time that is later than the second time. In some embodiments, controller 14 can receive multiple such indications, or "samples," of EGT at a rate, such as 100 Hz, thereby defining a time difference between EGT samples that is substantially equal between each sample (e.g., one one-hundredth of a second, or other such rates). In some embodiments, controller 14 can determine a first EGT difference between the second EGT and the first EGT (e.g., by subtracting the first EGT value from the second EGT value), and can divide the first EGT difference by a first time difference between the second time and the first time to determine a first EGT first derivative with respect to time (e.g., a numerical approximation of the first derivative corresponding to the slope of the line between successive EGT samples). Controller 14 can determine a second EGT difference between the third EGT and the second EGT, and can divide the second EGT difference by a second time difference between the third time and the second time to determine a second EGT first derivative with respect to time. Controller 14 can determine an EGT first derivative difference between the first EGT first derivative and the second EGT first derivative. Controller 14 can divide the EGT first derivative difference by a third time difference between the third time and the first time to determine the representation of the second derivative with respect to time of the EGT (i.e., a representation of the acceleration of EGT with respect to time).

The representation of the second derivative of the EGT can be compared to a threshold value (44). For example, controller 14 can compare the second derivative of the EGT to a threshold value (e.g., negative one hundred degrees Fahrenheit per second per second) corresponding to a threshold deceleration value (i.e., an acceleration value having a negative sign corresponding to a cooling of EGT). Controller 14 can determine whether the representation of the second derivative of the EGT satisfies the threshold value, such as by determining whether the representation of the second derivative of the EGT is less than (or equal to) the threshold value.

In some embodiments, controller 14 can determine the threshold value. For instance, controller 14 can determine the threshold value based on one or more of an indication of inlet air temperature of air entering inlet region 24 (e.g., received from inlet pressure and temperature sensor S_{P/T}), an indication of inlet air pressure of air entering inlet region 24 (e.g., received from inlet pressure and temperature sensor S_{P/T}), and an indication of a rotational speed of a rotor of gas turbine engine 12 (e.g., received from rotational speed sensor S_{S}). For example, as a pressure (and therefore density) of air entering inlet region 24 decreases, a rate of heat transfer from the air to EGT temperature sensor S_{T} decreases, thereby decreasing a magnitude of deceleration of EGT resulting from an engine flameout condition. Similarly, as a pressure of air entering inlet region 24 increases, a rate of heat transfer from the air to EGT temperature sensor S_{T} increases, thereby increasing a magnitude of deceleration of EGT resulting from an engine flameout condition. Accordingly, controller 14 can determine the threshold value as proportional to the inlet air pressure.

As another embodiment, as a temperature of air entering inlet region 24 decreases (thereby resulting in an increased density of the air), a rate of heat transfer from the air to EGT temperature sensor S_{T} increases, thereby increasing a magnitude of deceleration of EGT resulting from an engine flameout condition. Similarly, as a temperature of air entering inlet region 24 increases, a rate of heat transfer from the air to EGT temperature sensor S_{T} decreases, thereby decreasing a magnitude of deceleration of EGT resulting from an engine flameout condition. Accordingly, controller 14 can determine the threshold value as inversely proportional to the inlet air temperature.

As yet another embodiment, as a rotational speed of a rotor of gas turbine engine 12 increases, a thickness of a boundary layer of air flowing over EGT temperature sensor S_{T} decreases, thereby increasing a rate of heat transfer from the air to EGT temperature sensor S_{T} and increasing the corresponding magnitude of deceleration of EGT resulting from an engine flameout condition. Similarly, as a rotational speed of the rotor of gas turbine engine 12 decreases, a thickness of a boundary layer of air flowing over EGT temperature sensor S_{T} increases, thereby decreasing a rate of heat transfer from the air to EGT temperature sensor S_{T} and decreasing the corresponding magnitude of deceleration of EGT resulting from an engine flameout condition. Accordingly, controller 14 can determine the threshold value as proportional to the rotational speed of the rotor of gas turbine engine 12.

When the indication of the second derivative of the EGT does not satisfy the threshold value ("NO" branch of 44), the indication of EGT can continue to be received. When the indication of the second derivative of the EGT satisfies the threshold value ("YES" branch of 44), an engine flameout condition can be determined (46). For instance, controller 14 can determine that an engine flameout condition has occurred within gas turbine engine 12 based on determining that the indication of the representation of the second derivative of EGT satisfies the threshold value.

In some embodiments, operations 42 (i.e., determining the representation of the second derivative with respect to time of the EGT) and 44 (i.e., comparing the representation of the second derivative of the EGT to the threshold value) can be repeated multiple times, even after a first determination that the second derivative of EGT satisfies the threshold value. In such examples, determining the engine flameout condition can be based on a plurality of comparisons of the second derivative to the threshold value that satisfies a debounce criteria. For instance, controller 14 can determine a positive comparison as a comparison of the representation of the second derivative that satisfies the threshold value. Controller 14 can determine multiple such representations of the second derivative over a period of time (e.g., two, five, tens, hundreds, or other numbers of representations of the second derivative) and can compare each of the representations of the second derivative to the threshold value to determine a number of positive comparisons. Controller 14 can compare the number of positive comparisons to a debounce criteria, such as a threshold number of successive positive comparisons, a threshold number of positive comparisons, a threshold number of positive comparisons within a threshold time, or other debounce criteria. In such examples, controller 14 can determine the engine flameout condition in response to determining that the number of positive comparisons satisfies the debounce criteria.

In an embodiment, a fuel cutoff signal can be output to close a fuel inlet supply of the gas turbine engine based on the determined engine flameout condition (48). For example, controller 14 can output, in response to determining that an engine flameout condition has occurred within gas turbine engine 12, a signal to fuel cutoff solenoid 34 (e.g., an electrical signal, such as by opening and/or closing a circuit connected to fuel cutoff solenoid 34) to close a fuel inlet supply of gas turbine engine 12.

The gas turbine engine (e.g., the starter motor) can be operated for a period of time after determining the engine flameout condition to evacuate unburned fuel from the gas turbine engine (50). For instance, controller 14 can output a signal to starter 16 to continue to operate gas turbine engine 12 for a period of time (e.g., two seconds, ten seconds, twenty seconds, or other periods of time) after determining the engine flameout condition, thereby helping to evacuate unburned fuel from gas turbine engine 12 and the engine compartment.

### First Derivative Example

An alternative example not falling under the scope of the claims is also described herein, wherein a system implementing techniques of this disclosure can identify an engine flameout condition of a gas turbine engine based on a representation of a first derivative of EGT. For example, an engine flameout condition may be determined based on a comparison of a first derivative (with respect to time) of the EGT to a threshold value, such as a threshold value corresponding to a negative EGT rate. In this way, the techniques can enable a rapid response to cut off a fuel supply to the gas turbine engine based on a rate of the EGT. Accordingly, the techniques can help to minimize expulsion of unburned fuel from the gas turbine engine in the event of an engine flameout condition.

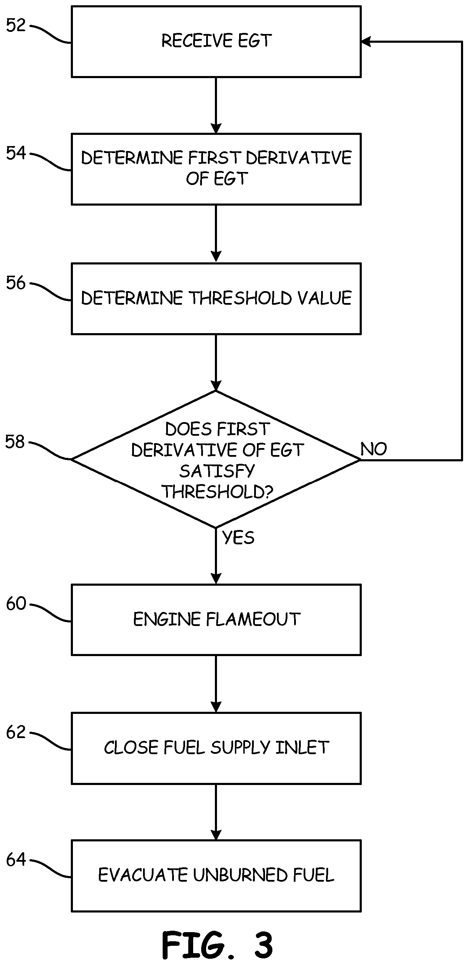

FIG. 3 is a flow diagram illustrating operations to determine an engine flameout condition, according to an embodiment. For purposes of illustration, the example operations are described below within the context of system 10 as shown in FIG. 1.

An indication of exhaust gas temperature (EGT) for a gas turbine engine can be received (52). For example, controller 14, including one or more processing circuits (e.g., processors) and/or computer-readable storage devices, can receive a signal (e.g., a voltage signal) from EGT temperature sensor S_{T} that is indicative of a temperature of exhaust gas exiting outlet region 32 of gas turbine 12.

A representation of a first derivative with respect to time of the EGT can be determined based on the received indication of the EGT (54). As an example, controller 14 can determine, based on the received indication of the EGT, a numerical approximation of a first derivative with respect to time of the EGT. For instance, controller 14 can receive a first indication of a first EGT at a first time, and a second indication of a second EGT at a second time that is later than the first time. In some embodiments, controller 14 can receive multiple such indications, or "samples," of EGT at a rate, such as 100 Hz, thereby defining a time difference between EGT samples that is substantially equal between each sample (e.g., one one-hundredth of a second, or other such periods). In some embodiments, controller 14 can determine an EGT difference between the second EGT and the first EGT, such as by subtracting the first EGT value from the second EGT value. Controller 14 can divide the EGT difference by a time difference between the second time and the first time to determine an indication of a first derivative of the EGT with respect to time (e.g., a numerical approximation of the first derivative corresponding to the slope of the line between successive EGT samples).

A threshold value can be determined based on the received indication of the EGT (56). As one example, the threshold value can be a function (e.g., a continuous function) of the EGT. For instance, controller 14 can determine the threshold value using a function (e.g., an equation) that takes EGT as an input and outputs the threshold EGT rate based on the EGT. As another example, controller 14 can determine the threshold value to be a first rate (e.g., negative twenty degrees Fahrenheit per second) if the EGT is in a first temperature range (e.g., less than six hundred degrees Fahrenheit), and can determine the threshold value to be a second rate (e.g., negative two hundred degrees Fahrenheit per second) if the EGT is in a second temperature range (e.g., greater than or equal to six hundred degrees Fahrenheit per second). In some embodiments, the first temperature range can include temperatures that are less than (or equal to) a threshold temperature, and the second temperature range can include temperatures that are greater than (or equal to) the threshold temperature. In other embodiments, the first temperature range can range from a first temperature to a second temperature, and the second temperature range can range from a third temperature to a fourth temperature. In yet other embodiments, controller 14 can determine the threshold value based on a comparison of the received indication of the EGT to multiple temperature ranges, such as three, four, ten, twenty, or other numbers of temperature ranges. In certain embodiments, the temperature ranges can be mutually exclusive, such that each temperature range includes one or more temperatures, but no two temperature ranges include the same temperature. In some embodiments, the temperature ranges can be overlapping, in that two or more of the temperature ranges can include the same temperature, such as two or more temperature ranges that define a hysteresis.

The representation of the first derivative of the EGT can be compared to the threshold value (58). For example, controller 14 can compare the first derivative of the EGT to the threshold value, such as a threshold value of negative twenty degrees Fahrenheit per second when the EGT is less than six hundred degrees Fahrenheit. Controller 14 can determine whether the representation of the first derivative of the EGT satisfies the threshold value, such as by determining whether the representation of the first derivative of the EGT is less than (or equal to) the threshold value.

When the indication of the first derivative of the EGT does not satisfy the threshold value ("NO" branch of 58), the indication of the EGT can continue to be received. When the indication of the first derivative of the EGT satisfies the threshold value ("YES" branch of 58), an engine flameout condition can be determined (60). For instance, controller 14 can determine that an engine flameout condition has occurred within gas turbine engine 12 based on determining that the indication of the representation of the first derivative of EGT satisfies the threshold value.

In some embodiments, operations 54 (i.e., determining the representation of the first derivative with respect to time of the EGT) and 58 (i.e., comparing the representation of the second derivative of the EGT to the threshold value) can be repeated multiple times, even after a first determination that the first derivative of EGT satisfies the threshold value. In such examples, determining the engine flameout condition can be based on a plurality of comparisons of the first derivative to the threshold value that satisfies a debounce criteria. For instance, controller 14 can determine a positive comparison as a comparison of the representation of the first derivative that satisfies the threshold value. Controller 14 can determine multiple such representations of the first derivative over a period of time (e.g., two, five, tens, hundreds, or other numbers of representations of the first derivative) and can compare each of the representations of the first derivative to the threshold value to determine a number of positive comparisons. Controller 14 can compare the number of positive comparisons to a debounce criteria, such as a threshold number of successive positive comparisons, a threshold number of positive comparisons, a threshold number of positive comparisons within a threshold time, or other debounce criteria. In such examples, controller 14 can determine the engine flameout condition in response to determining that the number of positive comparisons satisfies the debounce criteria.

In some embodiments, controller 14 can compare the number of positive comparisons to different debounce criteria based on the indication of the EGT. For instance, controller 14 can compare the number of positive comparisons to a first debounce criteria (e.g., successive positive comparisons for three hundred milliseconds) if the EGT is in a first temperature range (e.g., less than six hundred degrees Fahrenheit), and can compare the number of positive comparisons to a second debounce criteria (e.g., successive positive comparisons for one second) if the EGT is in a second temperature range (e.g., greater than or equal to six hundred degrees Fahrenheit). In certain embodiments, controller 14 can compare the number of positive comparisons to one of multiple different debounce criteria, such as three, five, tens, hundreds, or other numbers of debounce criteria (e.g., based on the indication of the EGT).

In an embodiment, a fuel cutoff signal can be output to close a fuel inlet supply of the gas turbine engine based on the determined engine flameout condition (62). For example, controller 14 can output, in response to determining that an engine flameout condition has occurred within gas turbine engine 12, a signal to fuel cutoff solenoid 34 (e.g., an electrical signal, such as by opening and/or closing a circuit connected to fuel cutoff solenoid 34) to close a fuel inlet supply of gas turbine engine 12.

The gas turbine engine (e.g., a starter motor of the gas turbine engine) can be operated for a period of time after determining the engine flameout condition to evacuate unburned fuel from the gas turbine engine (64). For instance, controller 14 can output a signal to starter 16 to continue to operate a starter motor of gas turbine engine 12 for a period of time (e.g., two seconds, ten seconds, twenty seconds, or other periods of time) after determining the engine flameout condition, thereby helping to evacuate unburned fuel from gas turbine engine 12 and the engine compartment.

The following are non-exclusive descriptions of the examples described herein. A method includes receiving an indication of exhaust gas temperature (EGT) for a gas turbine engine, and determining, by at least one processor, based on the received indication of the EGT, a representation of a second derivative with respect to time of the EGT. The method further includes comparing the representation of the second derivative of the EGT to a threshold value, and determining, based on the comparing, an engine flameout condition of the gas turbine engine.

The method of the preceding paragraph can optionally include, additionally and/or alternatively, any one or more of the following operations, features, configurations, and/or additional components:
The method can further include outputting, based on the determined engine flameout condition, a fuel cutoff signal to close a fuel inlet supply of the gas turbine engine.

The threshold value can be a negative value corresponding to a deceleration of EGT with respect to time.

Determining the engine flameout condition based on the comparing can include determining that the representation of the second derivative of the EGT is less than or equal to the negative value corresponding to the deceleration of the EGT with respect to time.

The method can further include determining, by the at least one processor, the threshold value.

The method can further include receiving one or more of an indication of inlet air temperature of air entering an inlet region of the gas turbine region, an indication of inlet air pressure of air entering the inlet region of the gas turbine engine, and an indication of a rotational speed of a rotor of the gas turbine engine. Determining the threshold value can include determining the threshold value based on one or more of the inlet air temperature, the inlet air pressure, and the rotational speed of the rotor.

Determining the threshold value can include determining the threshold value as inversely proportional to the inlet air temperature.

Determining the threshold value can include determining the threshold value as proportional to the inlet air pressure.

Determining the threshold value can include determining the threshold value as proportional to the rotational speed of the rotor.

Determining the representation of the second derivative with respect to time of the EGT and comparing the representation of the second derivative of the EGT to the threshold value can be repeated multiple times. Determining the engine flameout condition can be based on a plurality of comparisons of the second derivative to the threshold value that satisfies a debounce criteria.

The method can further include continuing to operate the gas turbine engine for a period of time after determining the engine flameout condition.

Receiving the indication of the EGT can include receiving a first indication of a first EGT at a first time, receiving a second indication of a second EGT at a second time later than the first time, and receiving a third indication of a third EGT at a third time later than the second time. Determining the representation of the second derivative with respect to time of the EGT can include determining a first EGT difference between the second EGT and the first EGT, dividing the first EGT difference by a first time difference between the second time and the first time to determine a first EGT first derivative with respect to time, determining a second EGT difference between the third EGT and the second EGT, dividing the second EGT difference by a second time difference between the third time and the second time to determine a second EGT first derivative with respect to time, determining an EGT first derivative difference between the first EGT first derivative and the second EGT first derivative, and dividing the EGT first derivative difference by a third time difference between the third time and the first time to determine the representation of the second derivative with respect to time of the EGT.

The first time difference and the second time difference can substantially equal.

A system includes a gas turbine engine comprising an inlet region and an outlet region, at least one exhaust gas temperature (EGT) sensor disposed proximate the outlet region of the gas turbine engine and configured to output an EGT signal indicative of a temperature of exhaust gas exiting the outlet region of the gas turbine engine, and a processing circuit communicatively coupled to the at least one EGT sensor. The processing circuit can be configured to receive the EGT signal from the at least one EGT sensor, and determine, based on the received EGT signal, a representation of a second derivative with respect to time of the temperature of the exhaust gas exiting the outlet region of the gas turbine engine. The processing circuit can be further configured to compare the representation of the second derivative of the temperature of the exhaust gas exiting the outlet region of the gas turbine engine to a threshold value, and determine, based on the comparison, an engine flameout condition of the gas turbine engine.

The system of the preceding paragraph can optionally include, additionally and/or alternatively, any one or more of the following features, configurations, and/or additional components:
The system can further include a fuel cutoff solenoid configured to open and close a fuel inlet of the gas turbine engine. The processing circuit can be further configured to output, based on the determined engine flameout condition, a fuel cutoff signal to the fuel cutoff solenoid to close the fuel inlet of the gas turbine engine.

The processing circuit can be further configured to determine the threshold value.

The system can further include at least one of a temperature sensor disposed proximate the inlet region of the gas turbine engine and communicatively coupled to the processing circuit, a pressure sensor disposed proximate the inlet region of the gas turbine engine and communicatively coupled to the processing circuit, and a rotational speed sensor. The temperature sensor can be configured to output a signal indicative of a temperature of air entering the inlet region of the gas turbine engine. The pressure sensor can be configured to output a signal indicative of a pressure of air entering the inlet region of the gas turbine engine. The rotational speed sensor can be configured to output a signal indicative of a rotational speed of a rotor of the gas turbine engine. The processing circuit can be further configured to receive at least one of the signal indicative of the temperature of the air entering the inlet region of the gas turbine engine, the signal indicative of the pressure of the air entering the inlet region of the gas turbine engine, and the signal indicative of the rotational speed of the rotor of the gas turbine engine. The processing circuit can be further configured to determine the threshold value based on one or more of the signal indicative of the temperature of the air entering the inlet region of the gas turbine engine, the signal indicative of the pressure of the air entering the inlet region of the gas turbine engine, and the signal indicative of the rotational speed of the rotor of the gas turbine engine.

The system can include at least the temperature sensor, and the processing circuit can be configured to determine the threshold value by at least being configured to determine the threshold value as inversely proportional to the inlet air temperature.

The system can include at least the pressure sensor, and the processing circuit can be configured to determine the threshold value by at least being configured to determine the threshold value as proportional to the inlet air pressure.

The system can include at least the rotational speed sensor, and the processing circuit can be configured to determine the threshold value by at least being configured to determine the threshold value as proportional to the rotational speed of the rotor.

A method includes receiving an indication of exhaust gas temperature (EGT) for a gas turbine engine, and determining, by at least one processor, based on the received indication of the EGT, a representation of a first derivative with respect to time of the EGT. The method can further include determining, by the at least one processor, based on the received indication of the EGT, a threshold value, comparing the representation of the first derivative of the EGT to the threshold value, and determining an engine flameout condition of the gas turbine engine based on the comparing.

The method of the preceding paragraph can optionally include, additionally and/or alternatively, any one or more of the following operations, features, configurations, and/or additional components:
Determining the threshold value based on the received indication of the EGT can further include determining the threshold value to be a first rate if the EGT is in a first temperature range, and determining the threshold value to be a second rate if the EGT is in a second temperature range.

Determining the representation of the first derivative with respect to time of the EGT and comparing the representation of the first derivative of the EGT to the threshold value can be repeated multiple times. Determining the engine flameout condition can be based on a plurality of comparisons of the first derivative to the threshold value that satisfies a first debounce criteria if the EGT is in the first temperature range, and can be based on a plurality of comparisons of the first derivative to the threshold value that satisfies a second debounce criteria if the EGT is in the second temperature range.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method comprising:
receiving an indication of exhaust gas temperature (EGT) for a gas turbine engine (12);
determining, by at least one processor, based on the received indication of the EGT, a representation of a second derivative with respect to time of the EGT;
comparing the representation of the second derivative of the EGT to a threshold value; and
determining an engine flameout condition of the gas turbine engine based on the comparing.

2. The method of claim 1, further comprising outputting, based on the determined engine flameout condition, a fuel cutoff signal to close a fuel inlet supply of the gas turbine engine.

3. The method of claim 1 or 2, wherein the threshold value is a negative value corresponding to a deceleration of EGT with respect to time.

4. The method of claim 1, 2 or 3, further comprising determining, by the at least one processor, the threshold value.

5. The method of claim 4, further comprising:
receiving one or more of an indication of inlet air temperature of air entering an inlet region of the gas turbine region, an indication of inlet air pressure of air entering the inlet region of the gas turbine engine, and an indication of a rotational speed of a rotor of the gas turbine engine,
wherein determining the threshold value comprises determining the threshold value based on one or more of the inlet air temperature, the inlet air pressure, and the rotational speed of the rotor.

6. The method of claim 5, wherein determining the threshold value comprises determining the threshold value as inversely proportional to the inlet air temperature.

7. The method of claim 5, wherein determining the threshold value comprises determining the threshold value as proportional to the inlet air pressure.

8. The method of claim 5, wherein determining the threshold value comprises determining the threshold value as proportional to the rotational speed of the rotor.

9. The method of any preceding claim, wherein determining the representation of the second derivative with respect to time of the EGT and comparing the representation of the second derivative of the EGT to the threshold value are repeated multiple times, and wherein determining the engine flameout condition is based on a plurality of comparisons of the second derivative to the threshold value that satisfies a debounce criteria.

10. A system comprising:
a gas turbine engine (12) comprising an inlet region (24) and an outlet region (32);
at least one exhaust gas temperature (EGT) sensor disposed proximate the outlet region of the gas turbine engine and configured to output an EGT signal indicative of a temperature of exhaust gas exiting the outlet region of the gas turbine engine; and
a processing circuit communicatively coupled to the at least one EGT sensor and configured to:
receive the EGT signal from the at least one EGT sensor;
determine, based on the received EGT signal, a representation of a second derivative with respect to time of the temperature of the exhaust gas exiting the outlet region of the gas turbine engine;
compare the representation of the second derivative of the temperature of the exhaust gas exiting the outlet region of the gas turbine engine to a threshold value (58); and
determine, based on the comparison, an engine flameout condition of the gas turbine engine.

11. The system of claim 10, further comprising:
a fuel cutoff solenoid (34) configured to open and close a fuel inlet of the gas turbine engine (12),
wherein the processing circuit is further configured to output, based on the determined engine flameout condition, a fuel cutoff signal to the fuel cutoff solenoid to close the fuel inlet of the gas turbine engine.

12. The system of claim 10 or 11, wherein the processing circuit is further configured to determine the threshold value.

13. The system of claim 10, 11 or 12, further comprising at least one of:
a temperature sensor (Sₜ) disposed proximate the inlet region (24) of the gas turbine engine (12) and communicatively coupled to the processing circuit, wherein the temperature sensor is configured to output a signal indicative of a temperature of air entering the inlet region of the gas turbine engine;
a pressure sensor disposed proximate the inlet region of the gas turbine engine and communicatively coupled to the processing circuit, wherein the pressure sensor is configured to output a signal indicative of a pressure of air entering the inlet region of the gas turbine engine; and
a rotational speed sensor (Sₛ) configured to output a signal indicative of a rotational speed of a rotor of the gas turbine engine,
wherein the processing circuit is further configured to:
receive at least one of the signal indicative of the temperature of the air entering the inlet region of the gas turbine engine, the signal indicative of the pressure of the air entering the inlet region of the gas turbine engine, and the signal indicative of the rotational speed of the rotor of the gas turbine engine; and
determine the threshold value based on one or more of the signal indicative of the temperature of the air entering the inlet region of the gas turbine engine, the signal indicative of the pressure of the air entering the inlet region of the gas turbine engine, and the signal indicative of the rotational speed of the rotor of the gas turbine engine.

14. The system of claim 13, wherein the system comprises at least the temperature sensor (Sₜ), and wherein the processing circuit is configured to determine the threshold value by at least being configured to determine the threshold value as inversely proportional to the inlet air temperature.

15. The system of claim 13, wherein the system comprises at least the pressure sensor, and wherein the processing circuit is configured to determine the threshold value by at least being configured to determine the threshold value as proportional to the inlet air pressure.

## Patentansprüche

1. Verfahren, umfassend:
Empfangen einer Angabe von Abgastemperatur (AGT) für einen Gasturbinenmotor (12);
Bestimmen, durch zumindest einen Prozessor, basierend auf der empfangenen Angabe der AGT, einer Darstellung einer zweiten Ableitung der AGT in Bezug auf Zeit;
Vergleichen der Darstellung der zweiten Ableitung der AGT mit einem Schwellenwert; und
Bestimmen eines Motorflammendurchschlagszustands des Gasturbinenmotors basierend auf dem Vergleich.

2. Verfahren nach Anspruch 1, ferner umfassend das Ausgeben eines Kraftstoffabschaltsignals basierend auf dem bestimmten Motorflammendurchschlagszustand, um eine Kraftstoffeinlasszufuhr des Gasturbinenmotors zu schließen.

3. Verfahren nach Anspruch 1 oder 2, wobei der Schwellenwert ein negativer Wert ist, der einer Entschleunigung von AGT in Bezug auf Zeit entspricht.

4. Verfahren nach Anspruch 1, 2 oder 3, ferner umfassend das Bestimmen des Schwellenwertes durch den zumindest einen Prozessor.

5. Verfahren nach Anspruch 4, ferner umfassend:
Empfangen von einem oder mehreren von einer Angabe von Einlasslufttemperatur von Luft, die in eine Einlassregion des Gasturbinenmotors eintritt, einer Angabe von Einlassluftdruck von Luft, die in die Einlassregion des Gasturbinenmotors eintritt, und einer Angabe einer Drehzahl eines Rotors des Gasturbinenmotors,
wobei das Bestimmen des Schwellenwertes das Bestimmen des Schwellenwertes basierend auf einem oder mehreren von der Einlasslufttemperatur, dem Einlassluftdruck und der Drehzahl des Rotors umfasst.

6. Verfahren nach Anspruch 5, wobei das Bestimmen des Schwellenwertes das Bestimmen des Schwellenwertes als umgekehrt proportional zu der Einlasslufttemperatur umfasst.

7. Verfahren nach Anspruch 5, wobei das Bestimmen des Schwellenwertes das Bestimmen des Schwellenwertes als proportional zu dem Einlassluftdruck umfasst.

8. Verfahren nach Anspruch 5, wobei das Bestimmen des Schwellenwertes das Bestimmen des Schwellenwertes als proportional zu der Drehzahl des Rotors umfasst.

9. Verfahren nach einem vorhergehenden Anspruch,
wobei das Bestimmen der Darstellung der zweiten Ableitung der AGT in Bezug auf Zeit und Vergleichen der Darstellung der zweiten Ableitung der AGT mit dem Schwellenwert mehrere Male wiederholt werden, und
wobei das Bestimmen des Motorflammendurchschlagszustands auf einer Vielzahl von Vergleichen der zweiten Ableitung mit dem Schwellenwert, die ein Entprellkriterium erfüllt, basiert.

10. System, umfassend:
einen Gasturbinenmotor (12), umfassend eine Einlassregion (24) und eine Auslassregion (32);
zumindest einen Abgastemperatur-(AGT-)Sensor, der neben der Auslassregion des Gasturbinenmotors angeordnet und konfiguriert ist, um ein AGT-Signal auszugeben, das eine Temperatur von Abgas angibt, das die Auslassregion des Gasturbinenmotors verlässt; und
eine Verarbeitungsschaltung, die kommunikativ an den zumindest einen AGT-Sensor gekoppelt und für Folgendes konfiguriert ist:
Empfangen des AGT-Signals von dem zumindest einen AGT-Sensor;
Bestimmen, basierend auf dem empfangenen AGT-Signal, einer Darstellung einer zweiten Ableitung der Temperatur des Abgases, das die Auslassregion des Gasturbinenmotors verlässt, in Bezug auf Zeit;
Vergleichen der Darstellung der zweiten Ableitung der Temperatur des Abgases, das die Auslassregion des Gasturbinenmotors verlässt, mit einem Schwellenwert (58); und
Bestimmen, basierend auf dem Vergleich, eines Motorflammendurchschlagszustands des Gasturbinenmotors.

11. System nach Anspruch 10, ferner umfassend:
ein Kraftstoffabschaltsolenoid (34), das konfiguriert ist, um einen Kraftstoffeinlass des Gasturbinenmotors (12) zu öffnen und zu schließen,
wobei die Verarbeitungsschaltung ferner konfiguriert ist, um basierend auf dem bestimmten Motorflammendurchschlagszustand ein Kraftstoffabschaltsignal an das Kraftstoffabschaltsolenoid auszugeben, um den Kraftstoffeinlass des Gasturbinenmotors zu schließen.

12. System nach Anspruch 10 oder 11, wobei die Verarbeitungsschaltung ferner konfiguriert ist, um den Schwellenwert zu bestimmen.

13. System nach Anspruch 10, 11 oder 12, ferner zumindest eines des Folgenden umfassend:
einen Temperatursensor (Sₜ), der neben der Einlassregion (24) des Gasturbinenmotors (12) angeordnet und kommunikativ an die Verarbeitungsschaltung gekoppelt ist, wobei der Temperatursensor konfiguriert ist, um ein Signal auszugeben, das eine Temperatur von Luft angibt, die in die Einlassregion des Gasturbinenmotors eintritt;
einen Drucksensor, der neben der Einlassregion des Gasturbinenmotors angeordnet und kommunikativ an die Verarbeitungsschaltung gekoppelt ist, wobei der Drucksensor konfiguriert ist, um ein Signal auszugeben, das einen Druck von Luft angibt, die in die Einlassregion des Gasturbinenmotors eintritt; und
einen Drehzahlsensor (Sₛ), der konfiguriert ist, um ein Signal auszugeben, das eine Drehzahl eines Rotors des Gasturbinenmotors angibt,
wobei die Verarbeitungsschaltung ferner für Folgendes konfiguriert ist:
Empfangen von zumindest einem von dem Signal, das die Temperatur der Luft angibt, die in die Einlassregion des Gasturbinenmotors eintritt, dem Signal, das den Druck der Luft angibt, die in die Einlassregion des Gasturbinenmotors eintritt, und dem Signal, das die Drehzahl des Rotors des Gasturbinenmotors angibt; und
Bestimmen des Schwellenwertes basierend auf einem oder mehreren von dem Signal, das die Temperatur der Luft angibt, die in die Einlassregion des Gasturbinenmotors eintritt, dem Signal, das den Druck der Luft angibt, die in die Einlassregion des Gasturbinenmotors eintritt, und dem Signal, das die Drehzahl des Rotors des Gasturbinenmotors angibt.

14. System nach Anspruch 13, wobei das System zumindest den Temperatursensor (Sₜ) umfasst und wobei die Verarbeitungsschaltung konfiguriert ist, um den Schwellenwert zu bestimmen, indem sie zumindest konfiguriert ist, um den Schwellenwert als umgekehrt proportional zu der Einlasslufttemperatur zu bestimmen.

15. System nach Anspruch 13, wobei das System zumindest den Drucksensor umfasst und wobei die Verarbeitungsschaltung konfiguriert ist, um den Schwellenwert zu bestimmen, indem sie zumindest konfiguriert ist, um den Schwellenwert als proportional zu dem Einlassluftdruck zu bestimmen.

## Revendications

1. Procédé comprenant :
la réception d'une indication de température de gaz d'échappement (EGT) pour un moteur à turbine à gaz (12) :
la détermination, par au moins un processeur, sur la base de l'indication reçue de l'EGT, d'une représentation d'une seconde dérivée par rapport au temps de l'EGT ;
la comparaison de la représentation de la seconde dérivée de l'EGT à une valeur de seuil ; et
la détermination d'un état d'extinction de moteur du moteur à turbine à gaz sur la base de la comparaison.

2. Procédé selon la revendication 1, comprenant en outre l'émission, sur la base de l'état d'extinction de moteur déterminé, d'un signal de coupure de carburant pour fermer l'admission de carburant du moteur à turbine à gaz.

3. Procédé selon la revendication 1 ou 2, dans lequel la valeur de seuil est une valeur négative correspondant à une décélération de l'EGT par rapport au temps.

4. Procédé selon la revendication 1, 2 ou 3, comprenant en outre la détermination, par l'au moins un processeur, de la valeur de seuil.

5. Procédé selon la revendication 4, comprenant en outre :
la réception d'une ou plusieurs parmi une indication de température d'air d'admission d'air pénétrant dans une région d'admission de la région de turbine à gaz, une indication de pression d'air d'admission d'air pénétrant dans la région d'admission du moteur à turbine à gaz et une indication d'une vitesse de rotation d'un rotor du moteur à turbine à gaz,
dans lequel la détermination de la valeur de seuil comprend la détermination de la valeur de seuil sur la base d'une ou plusieurs parmi la température de l'air d'admission, la pression de l'air d'admission et la vitesse de rotation du rotor.

6. Procédé selon la revendication 5, dans lequel la détermination de la valeur de seuil comprend la détermination de la valeur de seuil comme étant inversement proportionnelle à la température de l'air d'admission.

7. Procédé selon la revendication 5, dans lequel la détermination de la valeur de seuil comprend la détermination de la valeur de seuil comme étant proportionnelle à la pression de l'air d'admission.

8. Procédé selon la revendication 5, dans lequel la détermination de la valeur de seuil comprend la détermination de la valeur de seuil comme étant proportionnelle à la vitesse de rotation du rotor.

9. Procédé selon une quelconque revendication précédente,
dans lequel la détermination de la représentation de la seconde dérivée par rapport au temps de l'EGT et la comparaison de la représentation de la seconde dérivée de l'EGT à la valeur de seuil sont répétées à plusieurs reprises, et
dans lequel la détermination de l'état d'extinction de moteur est basée sur une pluralité de comparaisons de la seconde dérivée à la valeur de seuil qui répond à un critère d'anti-rebond.

10. Système comprenant :
un moteur à turbine à gaz (12) comprenant une région d'admission (24) et une région de sortie (32) ;
au moins un capteur de température de gaz d'échappement (EGT) disposé à proximité de la région de sortie du moteur à turbine à gaz et configuré pour émettre un signal d'EGT indicatif d'une température de gaz d'échappement sortant de la région de sortie du moteur à turbine à gaz ; et
un circuit de traitement couplé de manière communicative à l'au moins un capteur d'EGT et configuré pour :
recevoir le signal d'EGT de l'au moins un capteur d'EGT ;
déterminer, sur la base du signal d'EGT reçu, une représentation d'une seconde dérivée par rapport au temps de la température du gaz d'échappement sortant de la région de sortie du moteur à turbine à gaz ;
comparer la représentation de la seconde dérivée de la température du gaz d'échappement sortant de la région de sortie du moteur à turbine à gaz à une valeur de seuil (58) ; et
déterminer, sur la base de la comparaison, un état d'extinction de moteur du moteur à turbine à gaz.

11. Système selon la revendication 10, comprenant en outre :
un solénoïde de coupure de carburant (34) configuré pour ouvrir et fermer une admission de carburant du moteur à turbine à gaz (12),
dans lequel le circuit de traitement est configuré en outre pour émettre, sur la base de l'état d'extinction de moteur déterminé, un signal de coupure de carburant vers le solénoïde de coupure de carburant pour fermer l'admission de carburant du moteur à turbine à gaz.

12. Système selon la revendication 10 ou 11, dans lequel le circuit de traitement est configuré en outre pour déterminer la valeur de seuil.

13. Système selon la revendication 10, 11 ou 12, comprenant en outre au moins l'un parmi :
un capteur de température (Sₜ) disposé à proximité de la région d'admission (24) du moteur à turbine à gaz (12) et couplé de manière communicative au circuit de traitement, dans lequel le capteur de température est configuré pour émettre un signal indicatif d'une température d'air pénétrant dans la région d'admission du moteur à turbine à gaz ;
un capteur de pression disposé à proximité de la région d'admission du moteur à turbine à gaz et couplé de manière communicative au circuit de traitement, dans lequel le capteur de pression est configuré pour émettre un signal indicatif d'une pression d'air pénétrant dans la région d'admission du moteur à turbine à gaz ; et
un capteur de vitesse de rotation (Sₛ) configuré pour émettre un signal indicatif d'une vitesse de rotation d'un rotor du moteur à turbine à gaz,
dans lequel le circuit de traitement est configuré en outre pour :
recevoir au moins l'un parmi le signal indicatif de la température de l'air pénétrant dans la région d'admission du moteur à turbine à gaz, le signal indicatif de la pression de l'air pénétrant dans la région d'admission du moteur à turbine à gaz et le signal indicatif de la vitesse de rotation du rotor du moteur à turbine à gaz ; et
déterminer la valeur de seuil sur la base d'un ou plusieurs parmi le signal indicatif de la température de l'air pénétrant dans la région d'admission du moteur à turbine à gaz, le signal indicatif de la pression de l'air pénétrant dans la région d'admission du moteur à turbine à gaz et le signal indicatif de la vitesse de rotation du rotor du moteur à turbine à gaz.

14. Système selon la revendication 13, dans lequel le système comprend au moins le capteur de température (Sₜ) et dans lequel le circuit de traitement est configuré pour déterminer la valeur de seuil en étant au moins configuré pour déterminer la valeur de seuil comme étant inversement proportionnelle à la température de l'air d'admission.

15. Système selon la revendication 13, dans lequel le système comprend au moins le capteur de pression, et dans lequel le circuit de traitement est configuré pour déterminer la valeur de seuil en étant au moins configuré pour déterminer la valeur de seuil comme étant proportionnelle à la pression d'air d'admission.
